# EUROPÄISCHE PATENTSCHRIFT

(11) **EP 0 626 808 B1**
(45) Veröffentlichungstag und Bekanntmachung des Hinweises auf die Patenterteilung: **12.03.1997**
(21) Anmeldenummer: 93902128.3
(22) Anmeldetag: 23.12.1992
(51) Int. Cl.: A01N 59/26

(54) **FUNGIZIDE ZUSAMMENSETZUNGEN**
FUNGICIDAL COMPOSITIONS
COMPOSITIONS FONGICIDES

(30) Priorität: 24.12.1991 DE 4142974
(43) Veröffentlichungstag der Anmeldung: 07.12.1994
(73) Patentinhaber: BURKHART, Alexander, D-79361 Sasbach-Jechtingen (DE)
(72) Erfinder: BURKHART, Alexander, D-7831 Sasbach-Jechtingen (DE); BURKHART, Mario, D-7831 Sasbach-Jechtingen (DE)
(74) Vertreter: Altenburg, Udo, Dipl.-Phys.
(86) Internationale Anmeldenummer: EP9202988
(87) Internationale Veröffentlichungsnummer: WO9312658

(56) Entgegenhaltungen:
- EP-A- 0 230 209
- DE-A- 2 453 401
- DE-A- 2 927 994
- FR-A- 2 187 222
- GB-A- 2 238 960
- DATABASE WPIL Week 9130, Derwent Publications Ltd., London, GB; AN 91-219264
- DATABASE WPIL Week 8537, Derwent Publications Ltd., London, GB; AN 85-226607
- D.E.H.FREAR 'Chemistry of insecticides, fungicides and herbicides' 1948 , NEW YORK, US

## Beschreibung

Die Erfindung betrifft fungizide Zusammensetzungen aus einer Wirkstoffkombination auf der Basis eines Phosphits zur vorbeugenden und akuten Behandlung von Pilzerkrankungen bei Pflanzen, insbesondere im Wein- und Obstbau, Acker- und Gemüsebau, Hopfenanbau und bei Zierpflanzen.

Es ist bekannt, zur Bekämpfung von Pilzerkrankungen bei Pflanzen neben konservativen, toxischen Wirkstoffen, z.B. Kupfer, das sich im Boden akkumuliert, und Schwefel, Derivate der phosphorigen Säure zu verwenden. Dabei handelt es sich um anorganische und organische Salze, von denen letztere in Form von Alkylverbindungen oder Estern der phosphorigen Säure vorliegen. Ein Nachteil der organischen Phosphitverbindungen besteht darin, daß diese in der Regel auch fuhr den Menschen, die Tiere, Pflanzen und Mikroorganismen schädlich sein können und die Umwelt in erheblichem Maße belasten können. DATABASE WPIL/DERWENT, Week 9130, AN 91-219264 & JP,A,3 141 206 betrifft ein auf Blätter von Pflanzen angewandtes Fungizid, das ein Alkalimetasilicat als aktiven Stoff enthält. DE-A-24 53 401 ist auf phosphithaltige Fungizide gerichtet, die vorteilhafterweise ein (chemisches) Kontaktfungizid enthalten. Diese Fungizide enthalten kein Lecithin oder Silicat. FR-A-2 187 222 offenbart Fungizide, die neben Lecithin andere Fungizide enthalten können. Eine Anwendung von Phosphit und/oder Lecithin wird hierin nicht beschrieben. Zum vorbeugenden Pflanzenschutz im Bereich Rosen- und Zierpflanzen bzw. Gurken ist im Handel gegen Oidium (Echten Mehltau) ein Mittel mit dem Wirkstoff Lecithin erhältlich. Zur vorbeugenden Behandlung von Pilzkrankheiten im Obst- und Weinbau wird im Handel der Wirkstoff Natronwasserglas vertrieben. Nachteile der genannten Wirkstoffe bestehen darin, daß sie nur vorbeugend in einem beschränkten Einsatzbereich wirksam sind. Nachteilig ist bei Wasserglas zudem, daß es nur bei relativ hoher Konzentration ausreichend vorbeugend wirkt und wegen seiner hohen Basizität deshalb mit Vorsicht eingesetzt werden muß. So dürfen Spritzungen nicht bei Sonnenschein erfolgen, da sonst Verbrennungen auftreten können. Außerdem beträgt die Wartezeit drei Wochen.

Es wurde nun gefunden, daß durch Kombination eines anorganischen Phosphits mit weiteren Wirkstoffen, wie in Anspruch 1 definiert, eine überraschend hohe synergistische Fungizid-Wirkung erzielt werden kann.

Gegenstand der Erfindung sind somit fungizide Zusammensetzungen aus mehreren Wirkstoffen, wobei ein Wirkstoff ein Phosphit ist, die dadurch gekennzeichnet sind, daß sie eine Wirkstoffkombination aus wenigstens einem Phosphit ausgewählt aus K₂HPO₃, KH₂PO₃, Na₂HPO₃ und NaH₂PO₃, Lecithin und wenigstens einer Verbindung ausgewählt aus Natriummetasilicat und Natronwasserglas enthalten, wobei das Phosphit bei einem Gehalt von 0,05-0,1 Gew.-%, das Lecithin bei einem Gehalt von 0,04-0,86 Gew.-% und das Natronwasserglas und/oder Natriummetasilicat bei einem Gehalt von 0,1-0,5 Gew.-%, jeweils bezogen auf eine wäßrige Zusammensetzung, vorliegen.

Weiterer Gegenstand der Erfindung ist ein Verfahren zur Anwendung oben genannter fungizider Zusammensetzungen gemäß Anspruch 6.

Wie die Beispiele zeigen, entfalten die erfindungsgemäßen Zusammensetzungen ihre Wirkung sowohl vorbeugend gegen Pilzbefall als auch bei akutem Pilzbefall, insbesondere gegen Peronospora und Oidium.

Neben der hohen Wirksamkeit verglichen mit bisher bekannten Fungiziden zeichnen sich die erfindungsgemäßen Zusammensetzungen durch eine hervorragende Umweltverträglichkeit gegenüber Menschen, Tieren, Pflanzen und Mikroorganismen aus.

Verfahren zur Herstellung von Kalium- und Natriumphosphiten zur Fungizidbekämpfung sind Stand der Technik und dem Fachmann bekannt.

In einer bevorzugten Ausführungsform wird das Kalium- und/oder Natriumphosphit in Form einer Losung in der Zusammensetzung verwendet. Diese Phosphitlösung wird vorzugsweise durch Vermischen von phosphoriger Säure mit festem Kalium- bzw. Natriumhydroxid- oder Kalium- bzw. Natriumhydroxid-Lösung so hergestellt, daß sich ein pH-Wert von 5 - 7, vorzugsweise etwa 6 einstellt. Diese Lösung, das sogenannte Spritzmittel, dient als Ausgangslösung zur Herstellung einer Spritzbrühe. Hierzu wird vorzugsweise die oben genannte Lösung mit Wasser im Verhältnis etwa 1:100 verdünnt. Diese Spritzbrühe wird mit einer Konzentration von 0.05 - 0.1 Gew.-% Phosphit, insbesondere 0.07 - 0.09 Gew.-% besonders bevorzugt mit 0.075 - 0.08 Gew.-% bezogen auf eine wäßrige Zusammensetzung, durch tropfnasse Benetzung von Pflanzen, insbesondere im Wein- und Obstbau, Acker- und Gemüsebau sowie im Hopfenanbau und bei Zierpflanzen angewendet. Hierbei ist eine vorbeugende und akute Wirkung gegen Peronospora festzustellen.

Die phosphithaltige Spritzbrühe wird mit Lecithin, in einer Konzentration von 0.04 - 0.8 Gew.-%, besonders bevorzugt etwa 0.05 Gew.-% bezogen auf eine wäßrige Zusammensetzung versetzt. Ein geeignetes Handelspräparat für Lecithin ist "Neudorffs Bio Blatt" der Firma Neudorff, das laut Herstellerangaben gegen Echten Mehltau an Gurken, Rosen und Zierpflanzen wirkt, und das als Wirkstoff 25% Lecithin aus der Sojapflanze enthält.

Der obengenannten phosphit- und lecithinhaltigen Spritzbrühe wird außerdem Natriummetasilicat und/oder Natronwasserglas zugemischt, in einer Konzentration von 0.1 - 0.5 Gew.-%, besonders bevorzugt von 0.2 - 0.3 Gew.-% bezogen auf eine wäßrige Zusammensetzung. In einer bevorzugten Ausführungsform wird zumindest ein Teil der phosphorigen Säure direkt mit Natronwasserglas und/oder Natriummetasilicat gegebenenfalls ohne Zusatz von zusätzlichen Kalium- bzw. Natriumhydroxid oder Lösungen davon versetzt. Geignete Handelprodukte für Natriummetasilicat und Natronwasserglas sind von der Firma Brenntag AG vertriebene Produkte, die Na₂SiO₃ bzw. Na₂O und SiO₂ enthalten.

Neben den oben genannten Bestandteilen können den erfindungsgemäßen Zusammensetzungen vorzugsweise ferner noch wäßrige Extrakte und Lösungen aus Kompost und/oder Wurmhumus in einer Konzentration von 50 - 100 g/100 l wäßrige Zusammensetzung und/oder Kaliumhydrogentartrat (Weinstein) in einer Konzentration von 2 - 50 g/ 100 l wäßrige Zusammensetzung zugesetzt werden, da sich diese günstig auf eine Aktivierung der Stoffwechselstabilität und eine immunologische Stärkung der Pflanzen auswirken.

Die Anwendung der erfindungsgemäßen Zusammensetzung erfolgt vorzugsweise durch Spritzen durch Blattbehandlung mit oder ohne Bodenbehandlung, wobei die verwendete Menge zwischen 500 (z. B. im Dreiblattstadium) und 2500 l Spritzbrühe (z. B. bei erwachsener Pflanze) pro Hektar Fläche je nach Pflanzenwachstum beträgt. Üblicherweise wird im Spritzverfahren tropfnaß benetzt. In einer weniger bevorzugten Ausführungsform erfolgt die Anwendung im Sprühverfahren.

Die erfindungsgemäßen Zusammensetzungen sind in Abwesenheit von Natronwasserglas vorzugsweise unter Luftausschluß etwa bis 3 Jahre haltbar, ohne daß sich die Wirkung wesentlich ändert. Bei Verwendung von Natronwasserglas wird dieses der erfindungsgemäßen Zusammensetzung vorzugsweise kurz vor Gebrauch zugemischt. Es können erfindungsgemäß alle Wirkstoffe auch erst unmittelbar vor Gebrauch vermischt werden.

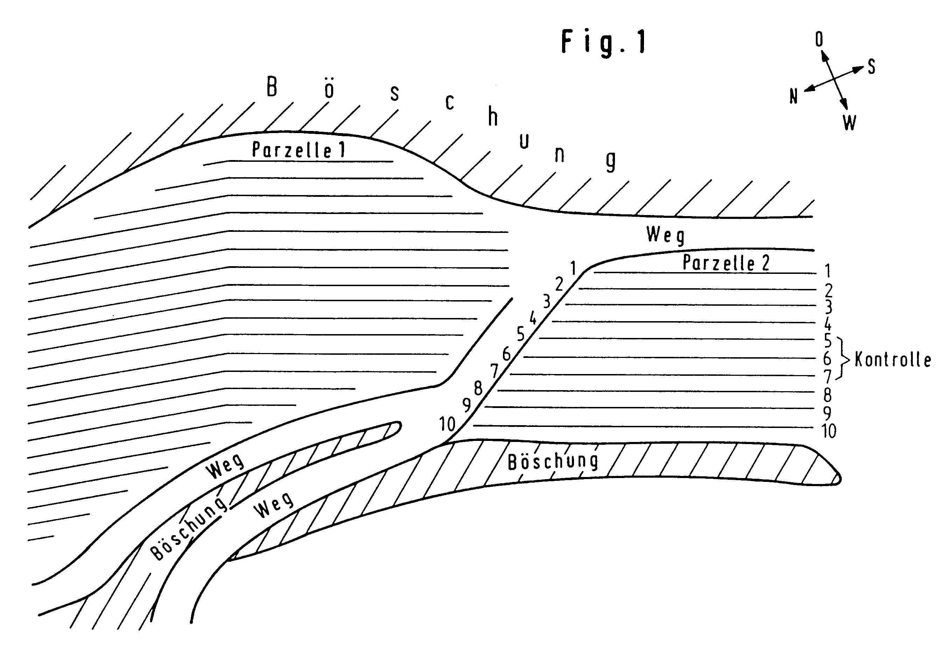

Die folgenden Beispiele erläutern die Erfindung. Die aufgeführten Versuche wurden alle im Freiland auf Weinbergen durchgeführt (siehe Fig. 1, Erklärung unten).
**I.** Herstellung und Anwendung von Kaliumphosphitlösung
   1.574 l phosphorige Säure (50%ig, Riedel de Häen AG) wird mit Wasser auf 5 l aufgefüllt (Lösung Nr. 1), ebenso wird 1.07 kg Kaliumhydroxidschuppen auf 5 l Wasser aufgefüllt (Lösung Nr. 2).
   Lösung Nr. 1 und 2 werden miteinander vermischt, wobei sich ein pH-Wert von etwa 6 einstellt.
   Zur Herstellung des Ausgangsprodukts für die Spritzbrühe wird oben genannte Lösung, das sogenannte Spritzmittel, mit Wasser im Verhältnis 1:100 verdünnt. Die Anwendung erfolgt durch tropfnasse Benetzung.
   Hierbei konnte allgemein eine vorbeugende und akute Wirkung gegen Peronospora festgestellt werden.
**II.** Herstellung und Anwendung der Spritzbrühe
   1. Spritzbrühe mit Phosphit und Lecithin (Vergleich)
      Zu 100 l obengenannter phosphithaltiger Spritzbrühe wird 0.17 l 25%ige Lecithin-Lösung ("Neudorff's Bio Blatt", Fa. W. Neudorff GmbH KG, Emmerthal) untermischt. Die Anwendung erfolgt durch tropfnasse Benetzung.
      Bei Spritzversuchen mit dieser Spritzbrühe konnte eine gegenüber den Einzelwirkstoffen verbesserte vorbeugende Wirkung gegen Peronospora und Oidium mit praktisch 100 % Erfolg festgestellt werden.
   2. Spritzbrühe mit Phosphit und Natronwasserglas (Vergleich)
      Zu 100 l phosphithaltiger Spritzbrühe (aus Beispiel **I**.) wird 0.6 l Natronwasserglas (Bestandteile: 8.1 % Na₂O, 27.2 % SiO₂, 64.6 % H₂O, und 35.3% Trübstoffe; Firma Brenntag AG, Mühlheim/Ruhr) zugegeben. Die Anwendung erfolgt analog zu den bisherigen Beispielen.
      Diese Spritzbrühe wurde auf dem in Fig. 1 schematisch dargestellten Weinberg in Hochberglage mit angebauten Trauben der Sorte Silvaner gespritzt (Ergebnisse siehe Tabelle 1 und 2). Wie Fig. 1 zu entnehmen ist, wurde der Weinberg in zwei Versuchsparzellen eingeteilt, von denen Parzelle 2 nochmals in 10 Reihen mit Reihen 5 - 7 als Kontrollreihen, die keiner Fungizidbehandlung unterzogen wurden, unterteilt wurde. Die Spritzungen erfolgten an dem jeweils angegebenen Datum, also insgesamt 6mal (Spritz. Nr. 1 - 6). Die Parzellen wurden etwa 1 Tag nach dem Spritztag beobachtet, d.h. die angegebenen Prozentwerte beziehen sich auf die Pilzbefallwerte nach einem Zeitraum von einem Tag nach der Spritzung. Bei Anwendung der erfindungsgemäßen Zusammensetzung (siehe Beispiel **II**.3. unten) trat die Wirkung bereits über Nacht ein, und während des weiteren Beobachtungszeitraumes waren keine Änderungen mehr festzustellen. Hingegen wurde in allen anderen Fällen, in denen die erfindungsgemäße Zusammensetzung nicht eingesetzt wurde, nach etwa einer Woche wieder eine Zunahme des Pilzbefalls beobachtet (siehe dazu die Bemerkungen in den Tabellen.)
   3. Spritzbrühe mit Phosphit, Lecithin und Natronwasserglas
      Zu 100 l phosphithaltiger Spritzbrühe (aus Beispiel **I**.) werden 0.17 l Lecithin-Lösung (analog zu **II**.1.) und 0.6 l Natronwasserglas (analog zu **II**.2.) zugemischt. Die Anwendung erfolgt analog zu den bisherigen Beispielen.

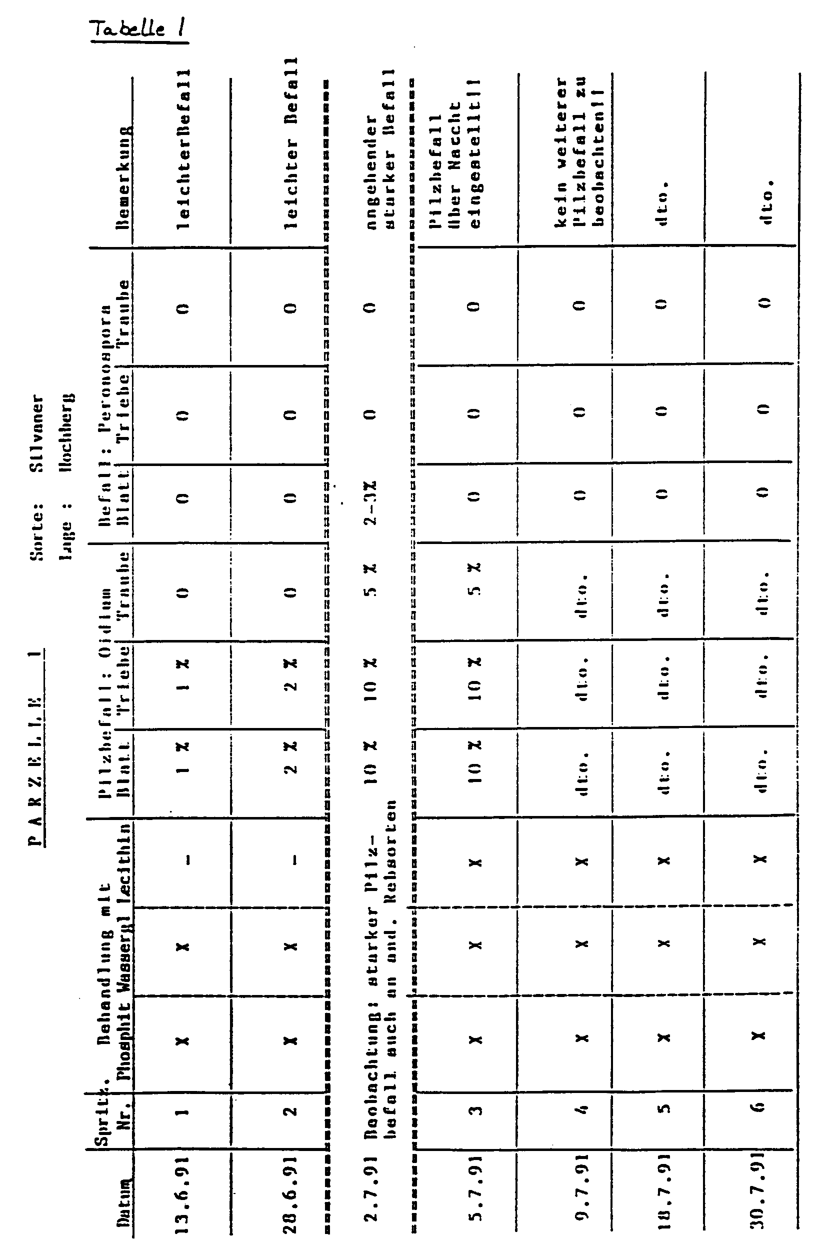

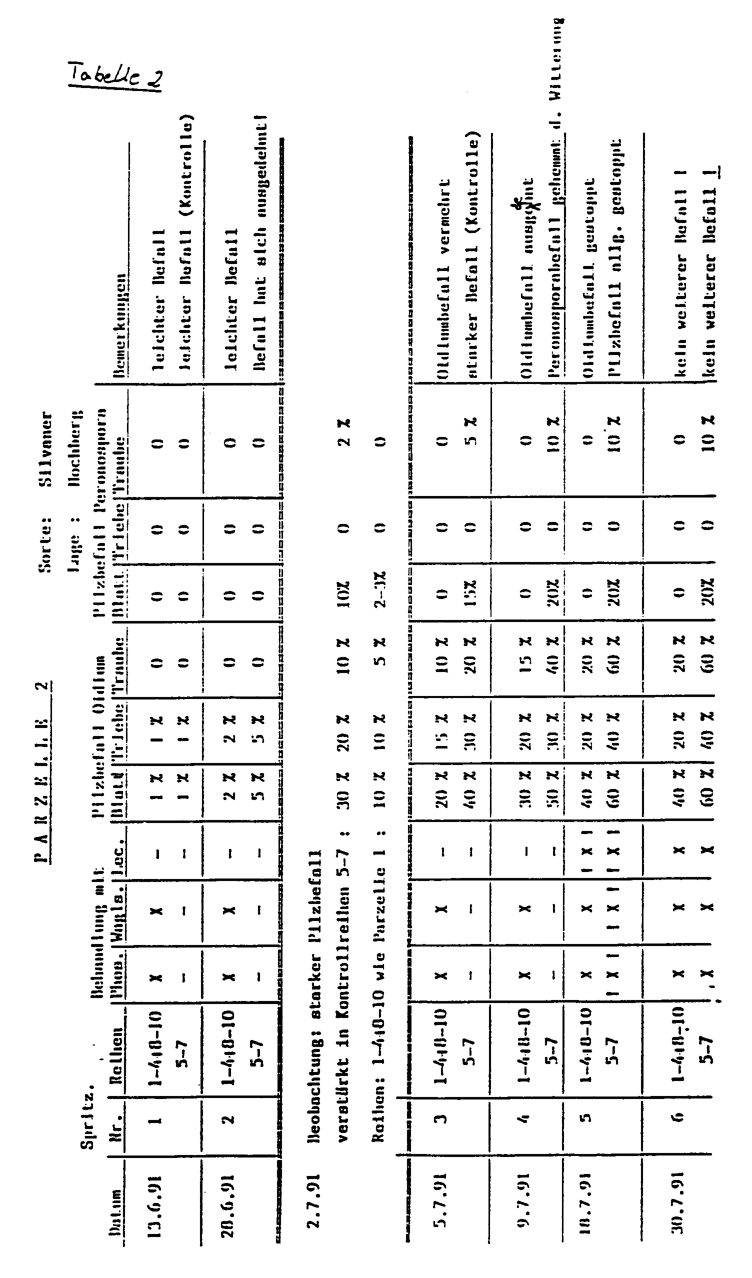

Die Ergebnisse bei Anwendung dieser Spritzbrühe auf dem in Fig. 1 dargestellten Weinberg sind Tabelle 1 und 2 zu entnehmen.

Die Werte aus Tabelle 1 und 2 zeigen, daß gegenüber keiner Fungizidbehandlung durch Anwendung einer Spritzbrühe mit Phosphit und Wasserglas (Beispiel **II**.2.) der Befall durch Oidium verringert und das Wachstum von Peronospora bei Befall mit diesem Pilz verhindert wurde. Bei starkem Pilzbefall mit Oidium verzögerte diese Spritzbrühe den Befall, stoppte ihn aber nicht.

Die Anwendung der erfindungsgemäßen Zusammensetzung (Beispiel **II**.3.) führte zusätzlich zu den bereits genannten Wirkungen auch bei starkem Oidiumbefall zu einem Stoppen des Pilzbefalls über Nacht. Ebenso wurde bei Peronospora der Pilzbefall und das Wachstum dieses Pilzes über Nacht eingestellt. Weiterhin zeigt ein Vergleich von Tabelle 1 und 2, daß durch Anwendung der erfindungsgemäßen Zusammensetzung in Parzelle 1 am 5.7.91 (Tabelle 1, Spritz. Nr. 3) der angehende starke Pilzbefall vollkommen eingestellt wurde, während in Parzelle 2 die Spritzbrühe mit Phosphit und Wasserglas (Tabelle 2, Spritz. Nr. 3) den Pilzbefall nicht stoppte. Eine synergistische Wirkung der erfindungsgemäßen Zusammensetzung gegenüber den Komponenten liegt also in der schnellen Einstellung des Pilzbefalls und in der akuten Wirkung gegen Oidium.

Zu Tabelle 1 und 2 ist noch anzumerken, daß andere Winzer, die die konventionelle Behandlung bevorzugten, ihre Behandlung der Weinberge bis Mitte August aufgrund weiteren Pilzbefalls durch Oidium, Peronospora und zusätzlich Botrytis ausdehnen mußten. Ferner traten in den genannten Versuchsparzellen 1 und 2 keine weiteren Pilzerkrankungen wie z.B. Botrytis, Roter Brenner oder Schwarzfleckenkrankheit auf. Die erfindungsgemäßen Zusammensetzungen dürften auch gegen die o.g. Pilzkrankheiten wirken. Der Einsatz der Zusammensetzungen gegen diese Pilzkrankheiten stellt eine weitere Ausführungsform der Erfindung dar.

Bei keiner der verwendeten Spritzbrühen konnte eine Schädigung der Umwelt gegenüber Menschen, Tieren, Pflanzen oder Mikroorganismen beobachtet werden.

## Patentansprüche

1. Fungizide Zusammensetzung aus mehreren Wirkstoffen, wobei ein Wirkstoff ein Phosphit ist, **dadurch gekennzeichnet,** daß sie eine Wirkstoffkombination enthält aus
wenigstens einem Phosphit ausgewählt aus K₂HPO₃, KH₂PO₃, Na₂HPO₃ und NaH₂PO₃,
Lecithin,
und wenigstens einer der beiden Verbindungen ausgewählt aus Natriummetasilicat und Natronwasserglas,
wobei das Phosphit bei einem Gehalt von 0.05 - 0.1 Gew.-%, das Lecithin bei einem Gehalt von 0.04 - 0.8 Gew.-% und das Natriummetasilicat und/oder Natronwasserglas bei einem Gehalt von 0.1 - 0.5 Gew.-%, jeweils bezogen auf eine wäßrige Zusammensetzung, vorliegen.

2. Zusammensetzung nach Anspruch 1, dadurch gekennzeichnet, daß das Phosphit bei einem Gehalt von 0.075 - 0.08 Gew.-% bezogen auf eine wäßrige Zusammensetzung vorliegt.

3. Zusammensetzung nach Anspruch 1 oder 2, gekennzeichnet durch einen Gehalt von etwa 0.05 Gew.-% Lecithin bezogen auf eine wäßrige Zusammensetzung.

4. Zusammensetzung nach einem der vorhergehenden Ansprüche, gekennzeichnet durch einen Gehalt an 0.2 - 0.3 Gew.-% Natronwasserglas und/oder Natriummetasilicat bezogen auf eine wäßrige Zusammensetzung.

5. Zusammensetzung nach einem der vorhergehenden Ansprüche, gekennzeichnet durch einen Gehalt an wäßrigen Extrakten und Lösungen aus Kompost und/oder Wurmhumus und/oder Kaliumhydrogentartrat (Weinstein).

6. Verfahren zur Behandlung von Pilzerkrankungen bei Pflanzen, insbesondere im Wein- und Obstbau. Acker- und Gemüsebau, Hopfenanbau und bei Zierpflanzen, gekennzeichnet durch Aufbringen einer Zusammensetzung nach einem der Ansprüche 1 - 5 auf diese Pflanzen.

7. Verfahren nach Anspruch 6, gekennzeichnet durch Anwendung der Zusammensetzung zur Vorbeugung gegen Pilzbefall.

8. Verfahren nach Anspruch 6, gekennzeichnet durch Anwendung der Zusammensetzung bei akutem Pilzbefall.

9. Verfahren nach einem der vorhergehenden Ansprüche 6 - 8, dadurch gekennzeichnet, daß die Behandlung gegen Peronospora erfolgt.

10. Verfahren nach einem der Ansprüche 6 - 8, dadurch gekennzeichent, daß die Behandlung gegen Oidium erfolgt.

11. Verfahren nach einem der vorhergehenden Ansprüche 6 - 10, dadurch gekennzeichnet, daß die Behandlung durch Spritzen, vorzugsweise durch tropfnasse Benetzung, erfolgt.

## Claims

1. Fungicide composition comprising several active substances, wherein one active substance is a phosphite, characterized in that it contains a combination of active substances comprising
at least one phosphite selected from K₂HPO₃, KH₂PO₃, Na₂HPO₃, and NaH₂PO₃,
lecithin,
and at least one of the two compounds selected from sodium metasilicate and soda waterglass,
wherein the phosphite is present in an amount of 0.05 - 0.1% by weight, the lecithin is present in an amount of 0.04 - 0.8% by weight, and the sodium metasilicate and/or soda waterglass is present in an amount of 0.1 - 0.5% by weight, each related to a watery composition.

2. Composition according to claim 1, characterized in that the phosphite is present in an amount of 0.075 - 0.08% by weight related to a watery composition.

3. Composition according to claim 1 or 2, characterized by an amount of about 0.05% by weight of lecithin related to a watery composition.

4. Composition according to any of the preceding claims, characterized by an amount of 0.2 - 0.3% by weight of soda waterglass and/or sodium metasilicate related to a watery composition.

5. Composition according to any of the preceding claims, characterized by an amount of watery extracts and solutions from compost and/or worm humus and/or potassium hydrogen tartrate (tartar).

6. Method for treating fungus diseases in plants, in particular in vineyards and fruit orchards, on arable land and in vegetable gardens, hop cultivation and in ornamental plants, characterized by applying a composition according to any of the claims 1 - 5 to these plants.

7. Method according to claim 6, characterized by application of the composition prophylactically against fungus attack/infestation.

8. Method according to claim 6, characterized by application of the composition against acute fungus attack/infestation.

9. Method according to any of the preceding claims 6 - 8, characterized in that the treatment is carried out against peronospora.

10. Method according to any of the claims 6 - 8, characterized in that the treatment is carried out against powdery mildew (oidium).

11. Method according to any of the preceding claims 6 to 10, characterized in that the treatment is carried out by spraying, preferably by wetting to dripping wetness.

## Revendications

1. Composition fongicide constituée de plusieurs matières actives, où une matière active est un phosphite, caractérisée en ce qu'elle contient une combinaison de matières actives constituée d'au moins un phosphite choisi parmi K₂HPO₃, KH₂PO₃, Na₂HPO₃ et NaH₂PO₃, la lécithine, et au moins l'une des deux composés choisis parmi le métasilicate de sodium et le verre soluble, où le phosphite est présent en une quantité de 0,05 à 0,1% en poids, la lécithine est présente en une quantité de 0,04 à 0,8% en poids et le métasilicate de sodium et/ou le verre soluble sont présents en une quantité de 0,1 à 0,5% en poids, dans tout les cas par rapport à une composition aqueuse.

2. Composition selon la revendication 1, caractérisée en ce que le phosphite est présent en une quantité, par rapport à une composition aqueuse, de 0,075 à 0,08% en poids.

3. Composition selon la revendication 1 ou 2, caractérisée en ce qu'elle contient environ 0,05% en poids de lécithine, par rapport à une composition aqueuse.

4. Composition selon l'une des revendications précédentes, caractérisée en ce qu'elle contient de 0,2 à 0,3% en poids de verte soluble et/ou de métasilicate de sodium, par rapport à une composition aqueuse.

5. Composition selon l'une des revendications précédentes, caractérisée en ce qu'elle contient des extraits et solutions aqueux d'un compost et/ou d'humus et/ou d'hydrogénotartrate de potassium (tartre).

6. Procédé pour le traitement des maladies fongiques des végétaux, en particulier dans les vignes et les vergers, dans les cultures maraîchères et autres, dans les cultures de houblon et les plantes d'ornement, caractérisée par l'application, sur ces végétaux, d'une composition selon l'une des revendications 1 à 5.

7. Procédé selon la revendication 6, caractérisée par l'utilisation de la composition pour assurer une prévention contre une infestation fongique.

8. Procédé selon la revendication 6, caractérisée par l'utilisation de la composition en présence d'une infestation fongique aiguë.

9. Procédé selon l'une des revendications précédentes 6 à 8, caractérisée en ce que le traitement a lieu contre Peronospora.

10. Procédé selon l'une des revendications précédentes 6 à 8, caractérisée en ce que le traitement a lieu contre Oidium.

11. Procédé selon l'une des revendications précédentes 6 à 10, caractérisée en ce que le traitement a lieu par pulvérisation, de préférence par mouillage jusqu'à égouttage.
